Europäisches Patentamt

European Patent Office

Office européen des brevets

(19)

(11) Publication number: 0 341 094
A2

## (12) EUROPEAN PATENT APPLICATION

(21) Application number: 89304639.1

(22) Date of filing: 08.05.89

(51) Int. Cl.⁴: G 01 N 21/62
G 01 N 23/223
// B07C5/342

(30) Priority: 06.05.88 GB 8810723
07.07.88 GB 8816157
09.11.88 GB 8826225
23.03.89 GB 8906853

(43) Date of publication of application:
08.11.89 Bulletin 89/45

(84) Designated Contracting States: BE DE NL

(71) Applicant: GERSAN ESTABLISHMENT
Staedtle 36
FL-9490, Vaduz (LI)

(72) Inventor: Smith, Martin Phillip
18 Hamilton Road
Wargrave Berkshire RG10 8BB (GB)

Stewart, Andrew David Garry
The Old Rectory
Ashampstead Reading Berkshire (GB)

Cooper, Martin
37 Terrington
Marlow Buckinghamshire SL7 2RE (GB)

Spear, Paul Martin
3 Bottisham Close Lower Earley
Reading Berkshire RG6 4ED (GB)

Welbourn, Christopher Mark
Oswald, London Road
Sunningdale Berkshire (GB)

(74) Representative: Lyndon-Stanford, Edward Willoughby
Brooke et al
MARKS & CLERK 57/60 Lincoln's Inn Fields
London WC2A 3LS (GB)

(54) Identifying specific objects or zones.

(57) In order to identify specific objects such as diamonds 2 in gangue on a conveyor belt, a line across the conveyor belt is irradiated with X-rays so that wanted particles 2 luminesce, and the luminescence is detected using an optical system 5 and a photo-multiplier tube 6. The response of the photo-multiplier tube 6 is scanned so that the location from which the luminescence was omitted is determined from the position of the scan at the instant of detection. The arrangement is useful for sorting minerals, including diamond, which luminesce.

FIG.2.

EP 0 341 094 A2

# Description

## IDENTIFYING SPECIFIC OBJECTS OR ZONES

### The Invention

The present invention provides methods of Claims 1 or 7 and the apparatus of Claims 4 or 8. The remaining Claims define preferred or optional features of the invention.

The invention is particularly applicable to sorting diamonds and other luminescing minerals from gangue on a wide belt (or just after projection from the end of the belt), but the invention is generally applicable.

The invention is particularly useful in arrangements in which it is difficult or impractical to scan the exciting radiation across a line, for instance where X-radiation is used.

The exciting radiation can be any suitable radiation, for instance X-ray, ultra-violet or visible laser, and the emitted luminescence which is detected can be any suitable luminescence, not necessarily in the visible spectrum.

If there is a long time constant after radiation (e.g. diamonds irradiated with X-rays), in a system where the objects or article quickly move out of the viewing zone, pre-radiation may be used to pre-excite the luminescence mechanism.

### Preferred Embodiment

The invention will be further described, by way of Example, with reference to the accompanying drawing, in which:

Figure 1 is a schematic, isometric view of part of the apparatus of the invention;

Figure 2 is a view looking down on the optical system, also showing electronic components; and

Figure 3 illustrates the output of the PMT (photo-multiplier tube) of Figure 2.

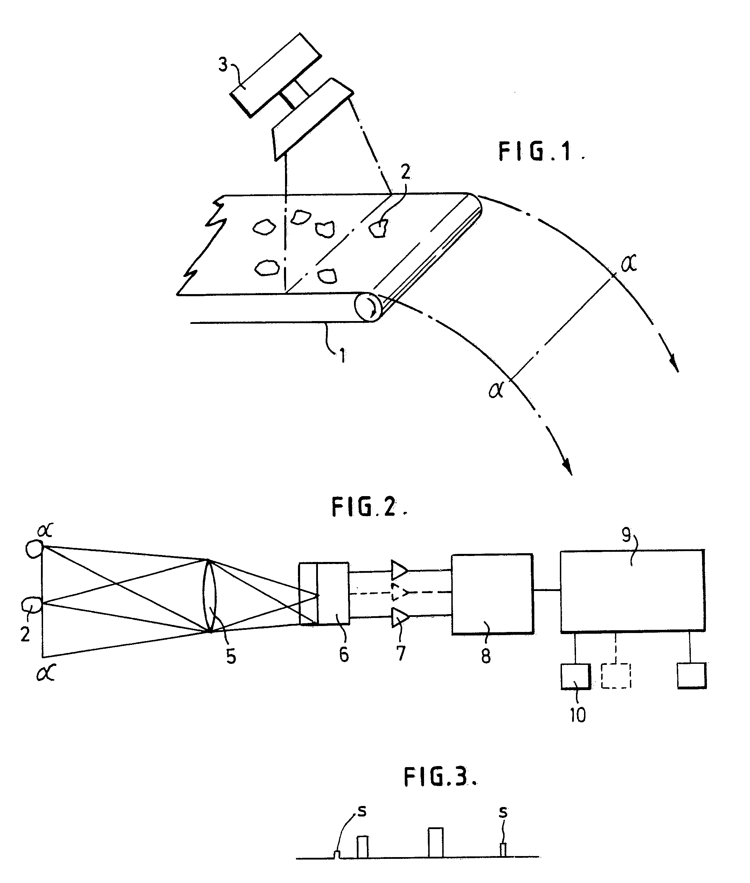

General background to the type of sorting being carried out is given in our Patent Application EP 89 304 642. However, the embodiment illustrated is much simpler than that specifically described for instance in Figures 2 to 7 of said Patent Application.

A conveyor belt 1 is shown, on which travel objects or particles 2 of gangue to be sorted. A line of X-ray radiation is projected transversely across the belt using any suitable X-ray device 3, and the luminescence, if any, of the particles 2, is detected after the particles 2 have been projected off the end of the belt 1, along a line 4-4 indicated in Figure 1. The detection uses the simple optical apparatus illustrated in Figure 2, comprising a lens system 5 and a PMT 6. The PMT 6 is connected through amplifier 7 to a micro-processor 8 in turn connected to air jet drives 9 which energise one of a number of air jets 10 distributed across the width of the path of the particles 2, in order to blow out of the path into a sort bin any particle selected by the micro-processor 8.

As represented in Figure 2, the image of the luminescing particle 2 is focused on the detecting plane of the PMT 6. The PMT 6 is scanned to determine whether there is an image on the detecting plane, in other words the detecting means is scanned across the particles 2, and a simple time domain technique indicates or identifies which particle 2 has emitted the luminescence. Figure 3 illustrates the signal from the PMT 6, showing start and end markers S and the detection of two particles, the start and end markers S giving registrations on the output signal. Knowing the start and end of scan, via the markers S, the location of the specific particle(s) is determined.

Any suitable scanning frequency can be used for scanning the PMT 6. For instance with a 1 m wide conveyor travelling at 3 m/s, 400 $H_2$ is suitable; with a 300 mm wide conveyor 1 travelling at 1.6 m/s, 133 $H_2$ is suitable.

As an alternative to using the scanned PMT 6, a scanned CCD array can be used, for instance a scanned 1024 element CCD array behind a micro-channel plate signal intensifier. Know the start and end of scan, via the markers S, the path of the particles 2 can be sectioned or divided into tracks according to groups of the CCD pixels, which groups can activate individual air jets 10. The CCD array can have a fixed internal clock, being scanned at say 2 MHz.

Anything discussed in said Patent Application can be incorporated in the present invention, provided it is suitable. Said Patent Application gives many details which are applicable to the present invention.

The present invention has been described above purely by way of example, and modifications can be made within the spirit of the invention.

### Claims

1. A method of identifying specific objects or zones which respond to an exciting radiation by emitting luminescence, the method comprising:
subjecting a plurality of the objects or zones to the exciting radiation;
detecting emitted luminescence using a detecting means in which the response is located in dependence on the location of the object or zone emitting the luminescence; and
scanning the response of the detecting means, the location from which the luminescence was emitted being determined from the position of the scan at the instant of detection of the emitted luminescence.

2. The method of Claim 1, wherein the detecting means comprise a photo-multiplier tube.

3. The method of Claim 1, wherein the detecting means comprise a CCD array.

4. Apparatus for identifying specific objects or zones which respond to an exciting radiation by emitting luminescence, for use in association with means for subjecting a plurality of the objects or zones to the exciting radiation, the apparatus comprising:

detecting means for detecting emitted luminescence, the response being located in the detecting means according to the position of the object or zone emitting the luminescence;

means for scanning the response of the detecting means; and

means for determining from the position of the scan at the instant of detection of the emitted luminescence, the location of a specific object or zone to be identified.

5. The apparatus of Claim 4, wherein the detecting means comprise a photo-multiplier tube.

6. The apparatus of Claim 4, wherein the detecting means comprise a CCD array.

7. A method of identifying specific objects or zones, substantially as herein described with reference to the accompanying drawings.

8. Apparatus for identifying specific objects or zones, substantially as herein described with the reference to, and as shown in, the accompanying drawings.

9. The apparatus of any of Claims 4 to 6 and 8, and further comprising means for subjecting the objects or zones to the exciting radiation.

EP 0 341 094 A2

FIG.1.

FIG.2.

FIG.3.